(19) Europäisches Patentamt
European Patent Office
Office européen des brevets

(11) **EP 3 057 267 B1**

(12) **FASCICULE DE BREVET EUROPEEN**

(45) Date de publication et mention
de la délivrance du brevet:
**17.01.2018 Bulletin 2018/03**

(51) Int Cl.:
*H04L 12/24* (2006.01)　　*H04W 84/18* (2009.01)
*H04W 8/18* (2009.01)

(21) Numéro de dépôt: **16155087.6**

(22) Date de dépôt: **10.02.2016**

(54) **PROCEDE POUR GENERER DES GROUPES AU SEIN D'UN RESEAU RADIO AD HOC**

VERFAHREN ZUM ERZEUGEN VON GRUPPEN INNERHALB EINES AD-HOC-FUNKNETZES

METHOD FOR GENERATING GROUPS WITHIN AN AD HOC WIRELESS NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.02.2015 FR 1500297**

(43) Date de publication de la demande:
**17.08.2016 Bulletin 2016/33**

(73) Titulaire: **THALES**
**92400 Courbevoie (FR)**

(72) Inventeurs:
• **MASSIN, Raphaël**
**92622 Gennevilliers Cedex (FR)**

• **LE MARTRET, Christophe**
**92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A1- 2 987 200　　US-A1- 2007 297 374**

**Description**

L'invention concerne un procédé pour générer des groupes ou en anglo-saxon des clusters au sein d'un réseau radio ad hoc mobile vérifiant des contraintes de taille, par exemple le diamètre d'un cluster. Le procédé s'applique, par exemple, pour créer des clusters au sein d'un réseau radio où les noeuds appartiennent à un groupe organisationnel. Elle se situe au niveau de la couche liaison de données ou de la couche réseau. Le procédé s'applique indépendamment de la taille du réseau, et est particulièrement efficace pour des réseaux à forte densité, par exemple un réseau avec plus de cent voisins à un bond de portée selon la terminologie utilisée dans le domaine des réseaux radios.

Un réseau radio mobile ad hoc est un réseau radio sans infrastructure où les noeuds du réseau sont à la fois terminaux et relais. Dans le domaine de la clusterisation appliquée aux réseaux radio ad hoc mobiles, il existe plusieurs problèmes techniques dont les suivants :

- La configuration de clusters homogènes en taille; les clusters doivent être de taille suffisante mais pas trop grande pour assurer une bonne gestion des communications. On cherche à éviter les clusters singletons de taille 1 ;
- La vitesse de convergence: les clusters doivent être construits rapidement ;
- La stabilité des clusters: la structure des clusters doit être stable en situation statique et le plus stable possible en mobilité ;
- Le regroupement en clusters de noeuds qui ont des points communs, par exemple l'appartenance au même groupe opérationnel.

De nombreux travaux relatifs au domaine des clusters sont connus de l'art antérieur, pour ce qui concerne leur formation, la gestion de la mobilité des noeuds au sein d'un réseau, etc.

Par exemple, le brevet CN 101360033 traite de la clusterisation et prend en compte trois métriques de noeud que sont la mobilité d'un noeud, la taille du cluster et l'énergie résiduelle du noeud. Les noeuds sont groupés ensemble, puis un chef de cluster est choisi. Les mobilités entre clusters sont déterminées par un état lié à la combinaison des trois métriques citées. La demande de brevet US20070297374 décrit une méthode de gestion de groupement de stations d'un réseau de communications ad hoc. Pour chaque groupe une fonction de connectivité basée sur une matrice de connectivité représentative du réseau est utilisée. Si le résultat de l'application de la fonction est une matrice unitaire, les groupes de stations sont considérés satisfaisant pour le fonctionnement du réseau. Le brevet WO 2007/099264 décrit une méthode qui minimise la signalisation échangée entre les noeuds au cours de l'étape d'élection d'un chef de cluster. La méthode de clusterisation consiste à choisir comme chef de cluster le noeud connu de poids le plus fort et à relier les noeuds non chef de cluster à ce noeud chef de cluster. La taille des clusters est fixée par la valeur d'un paramètre $k$ qui représente le nombre de bonds radio maximal entre un noeud et son chef de cluster, c'est-à-dire que le diamètre de ce cluster est limité à $2*k$.

Le brevet US 2002/0103893 traite de la fusion de clusters basée sur la taille des clusters qui peuvent potentiellement fusionner. Cette fusion est décidée par deux noeuds de deux clusters voisins.

L'enseignement du brevet US 6 876 643 concerne un réseau de type Bluetooth, et décrit un procédé pour construire un réseau en un nombre minimum de clusters de taille bornée, avec la taille égale au nombre de noeuds. Un noeud chef de cluster est défini par cluster. Le brevet décrit deux techniques pour accélérer la formation du réseau : le transfert d'informations au cours de la formation du réseau en utilisant des bits des messages utilisés par les procédures de découverte de voisinage et l'utilisation de paramètres spécifiques pour séparer les noeuds entre ceux qui seront en émission et ceux qui seront en réception. Le nombre de chef de clusters est calculé dynamiquement mais nécessite la connaissance du nombre de noeuds dans tout le réseau. De plus, le procédé décrit requiert la présence d'un super chef de cluster ou super-maître qui vérifie que le nombre de clusters est bien celui recherché. L'affiliation des noeuds à un cluster ne prend en compte que la taille du cluster.

La publication de T. Ohta, S. Inoue and Y. Kakuda; "An Adaptive Multihop Clustering Scheme for Highly Mobile Ad Hoc Networks"; IEEE ISADS'03 propose un protocole de clusterisation dynamique qui crée des clusters dont la taille n'excède pas un maximum. Cependant le protocole n'utilise aucune métrique particulière pour former les clusters, ces derniers ont donc une forme aléatoire. De plus il ne s'intéresse pas au contexte où les noeuds du réseau sont répartis en groupes opérationnels.

Le document de H. Wu, Z. Zhong, and L. Hanzo, intitulé "A cluster-head selection and update algorithm for ad hoc networks," in Proc. IEEE GLOBECOM, Dec. 2010, pp. 1-5, propose un protocole de clusterisation dynamique qui crée des clusters en cherchant à utiliser l'information de sous-réseau auquel appartient chaque noeud. La solution proposée choisit des noeuds CH de manière à ce qu'ils soient non-voisins, et conduit à l'affiliation à ces noeuds CH non voisins de tous les noeuds non-CH qui leur sont voisins. Ainsi la taille des clusters dépend uniquement de la densité du réseau.

Le document de D. Camara, C. Bonnet and N. Nikaein, intitulé "Topology management for group oriented networks," in Proc. IEEE PIMRC, Honolulu, Hawai, Sep. 2010, pp. 2739-2744 décrit une méthode qui assemble en clusters les noeuds d'une même communauté d'intérêt. La méthode utilise des noeuds privilégiés (DCH) qui sont par défaut des chefs de cluster CH. Lorsqu'aucun DCH n'est présent dans le voisinage d'un noeud, ce dernier peut devenir CH. Dans la solution proposée, l'appartenance à une communauté n'est prédéfinie que pour les noeuds privilégiés DCH, les noeuds non-DCH appartenant d'office à la communauté d'intérêt du noeud privilégié DCH le plus proche. Une fonction de coût gouverne la façon dont les noeuds s'affilient entre eux pour former des clusters dont la taille est bornée. Cette fonction de coût ne prend cependant pas en compte les communautés d'intérêt.

Les solutions décrites dans l'art antérieur ne prennent pas en compte de manière explicite la structure en groupes et la taille des clusters.

Dans la suite de la description, on considère que deux clusters sont voisins si au moins un membre d'un des deux clusters est voisin à un bond radio d'un membre de l'autre cluster. La taille d'un cluster est définie par exemple à partir du diamètre du sous-graphe induit par ses membres. L'expression « réseau dense » ou à forte densité concerne les réseaux radio pour lesquels le nombre de noeuds en portée radio de n'importe quel noeud est en moyenne au moins égal à cent. Un groupe opérationnel de noeuds est défini dans la présente invention comme un ensemble de noeuds qui ont des fonctions identiques, ou similaires, tels qu'un groupe de pompiers, de secours, etc. La description utilisera indifféremment le mot noeud ou le mot membre pour désigner un noeud d'un cluster.

L'invention concerne un procédé pour regrouper de manière distribuée et dynamique des noeuds dans un réseau radio ad hoc mobile RM, chaque noeud comprenant un processeur muni d'un algorithme de clustérisation et un module de communication, les noeuds communiquant entre eux au moyen de messages, le procédé comportant au moins les étapes suivantes :

- définir a priori un ensemble de contraintes à vérifier pour les clusters, de fonctionnement du réseau, telles que des contraintes sur la topologie du réseau et/ou sur la qualité des liens de communication, ces contraintes étant mémorisées dans une table de données, le procédé est caractérisé en ce que :
- on regroupe les noeuds du réseau en clusters,
- le procédé est exécuté au sein de chaque cluster, considérant un premier cluster local $C_k$, et un ensemble de noeuds $\{u_i\}$ appartenant à ce cluster,
- au niveau du noeud maître du cluster $C_k$, pour chacun des clusters $C_l$ voisins du cluster $C_k$, déterminer si les clusters $C_k \backslash \{u_i\}$ et $C_\ell \cup \{u_i\}$ vérifient les contraintes de fonctionnement sur les clusters,
- au niveau du noeud maître du cluster local $C_k$, pour chacun des clusters voisins $C_\ell$ pour lesquels les contraintes sur les clusters sont satisfaites, calculer le gain g induit par la mobilité des groupes de noeuds $\{u_i\}$ du premier cluster $C_k$ vers le cluster $C_\ell$ le gain g étant défini comme étant la différence entre la somme des coûts des clusters $C_\ell$ et $C_k$ et la somme des coûts des clusters $C_k \backslash \{u_i\}$ et $C_\ell \cup \{u_i\}$,
- au niveau du noeud maître du cluster local, retenir le cluster qui induit le gain g le plus élevé, et
- échanger au moins un message entre les deux clusters afin que l'ensemble des noeuds $\{u_i\}$ quitte le cluster $C_k$ pour rejoindre le cluster $C_\ell$.

Chacun des noeuds peut former son propre cluster singleton.

Selon une variante de réalisation, on réalise les contraintes sur chaque cluster en s'assurant que le graphe induit par le cluster possède certaines propriétés telles que la connectivité, un nombre de noeuds inférieur à un seuil, un diamètre inférieur à un seuil, une forme géométrique particulière, par exemple une structure en étoile dont le centre est le chef de cluster, ou une qualité suffisante des liens radio à l'intérieur du cluster.

Le procédé peut comporter au moins les étapes suivantes :

- une étape d'apprentissage des informations d'un cluster local $C_k$ et des clusters voisins,
- définir la liste des ensembles de membres du cluster local $C_k$ qui sont dans le même groupe opérationnel, définir une liste de noeuds M initialement vide, initialiser une valeur de gain g à zéro,
- tester si la liste L des ensembles de membres du cluster du même groupe opérationnel est vide et choisir au hasard un ensemble groupe de noeuds, cluster, $(\{u_i\}, C_l)$ contenu dans une liste M correspondant aux noeuds qui induisent un gain maximal et migrer les groupes de noeuds $\{u_i\}$ du cluster local $C_k$ au deuxième cluster $C_l$,
- si la liste L n'est pas vide, alors on enlève de cette liste son premier élément $\{u_i\}$,
- on teste si après le départ du groupe des noeuds $\{u_i\}$ du cluster local $C_k$, ce dernier satisfait encore les contraintes sur les clusters,

    - si oui, alors on considère N la liste des clusters voisins du cluster local $C_k$ et on va à une étape suivante de test sur la liste des clusters,
    - si non, alors on retourne à l'étape de test sur la liste L,

- si la liste des clusters voisins n'est pas vide, on considère le premier élément de N correspondant au premier cluster voisin de la liste, on enlève le premier élément de N, puis on vérifie si l'union du premier cluster voisin $C_l$ avec le groupe de noeuds du cluster $\{u_i\}$ satisfait bien les contraintes sur les clusters,
- si les contraintes sur les clusters ne sont pas satisfaites, alors on retourne à l'étape qui considère la liste des clusters non vide,
- sinon on va calculer le gain $g(\{ui\},C_k,C_l)$,

  - si ce gain est strictement supérieur à une valeur de gain g de référence, alors mettre à jour la référence de gain g en utilisant le gain $g(\{u_i\},C_k,C_l)$ induit par la mobilité du groupe de noeud vers le cluster $C_l$, on met à jour la liste $M=\{\{u_i\},C_l\}$ et on retourne à l'étape précédente de test qui considère la liste des clusters non vide,
  - si ce gain n'est pas strictement supérieur à g alors on teste si la valeur de gain g est égale à la valeur $g(\{ui\},C_k,C_l)$, si oui, on ajoute $\{\{u_i\},C_l\}$ à M : $M = M \cup \{\{u_i\},C_l\}$ et on retourne à l'étape qui considère la liste des clusters non vide,
  - si la valeur de gain trouvée est strictement inférieure à g alors on retourne à l'étape qui considère la liste des clusters non vide.

L'ensemble des noeuds considérés est formé, par exemple, de noeuds regroupés par fonctionnalité.

Le procédé peut comporter une phase de maintenance dans laquelle chaque cluster détermine sa dimension et vérifie si la liste des noeuds contenus dans le cluster forme un graphe connexe. La dimension que l'on vérifie est, par exemple, le diamètre du cluster et dans le cas où le diamètre du cluster est supérieur à une valeur donnée, le groupe de noeuds appartenant au cluster est scindé en plusieurs groupes de noeuds.

La scission du groupe de noeuds est, par exemple, réalisée en utilisant les étapes suivantes :

- regrouper le noeud de plus haut degré avec tous ses voisins,
- construire des composantes connexes avec les noeuds restants.

Le procédé peut aussi comporter les étapes suivantes : lors d'une première étape on teste si le cluster $C_k$ vérifie les contraintes sur les clusters,

- si oui on conserve le cluster en l'état,
- si le cluster ne vérifie pas les contraintes, alors on exécute les étapes suivantes :

  - soit L la liste des ensembles de membres du cluster local $C_k$ qui sont dans le même groupe opérationnel,
  - si la liste L est vide la procédure de maintenance est terminée,
  - si la liste L contient un élément au moins alors on teste si l'ensemble $\{u_i\}$ est connexe,

    - si oui on remonte à l'étape de test de la liste L vide,
    - si non, alors on scinde l'ensemble en plusieurs composantes connexes $\{\{u^1_i\},...,\{u^m_i\}\}$ et on va créer un nouveau cluster avec chacune de ces composantes connexes, puis on remonte à l'étape de test de la liste L vide.

Le calcul de gain est, par exemple, effectué en utilisant une fonction de coût exprimée de la manière suivante :

$$c_1(C_k) = 1 - \frac{n_{k,\ell} \cdot (n_{k,\ell} + 1)}{n_\ell^g \cdot (n_\ell^g + 1)},$$

avec $\ell$ le groupe opérationnel dont le nombre de membres est le plus élevé dans le cluster k, $n_{k,\ell}$ le nombre de noeuds du groupe $\ell$, et $n_\ell^g$ la taille du groupe opérationnel numéro $\ell$.

Selon une autre variante, le calcul de gain est effectué en utilisant une fonction de coût exprimée de la manière suivante :

$$c_2(C_k) = 1 - \frac{n_k \cdot (n_k + 1)}{n_{max} \cdot (n_{max} + 1)},$$

avec $n_k$ le nombre de membres du cluster $C_k$, et $n_{max}$ la taille maximale admissible d'un cluster.

Les noeuds communiquent entre eux en utilisant des messages de type « Hello ».

D'autres caractéristiques et avantages de la présente invention apparaîtront mieux à la lecture de la description qui suit annexée des figures qui représentent :

- La figure 1, un exemple de réseau mobile ad hoc avec plusieurs groupes dont les membres sont identifiés,
- La figure 2, un organigramme décrivant un exemple de succession d'étapes pour l'algorithme de clusterisation,
- La figure 3, un exemple d'algorithme de maintenance,
- Les figures 4 et 5, un exemple chiffré de mise en oeuvre du procédé selon l'invention.

Afin de mieux faire comprendre l'invention, l'exemple donné ci-après va être décrit dans le cas d'un réseau radio mobile ad hoc RM comprenant plusieurs groupes $G_1$, $G_2$, $G_3$, $G_4$, $G_5$, $G_6$, dont les membres sont identifiés par des graphismes différents, carré, triangle, rond, losange, étoile, triangle inversé. Dans cet exemple, chaque noeud Ei=1, 2,.., 30, du réseau appartient à un seul groupe opérationnel $G_i$. Un noeud du réseau est équipé de moyens de communication radio, un émetteur/récepteur 101/102, un processeur 103 adapté à collecter l'information qui lui est nécessaire via l'échange de messages de signalisation avec ses voisins. Chaque noeud utilise cette information pour s'affilier dynamiquement à un cluster de manière à maximiser une fonction de coût tout en respectant des contraintes, telles que par exemple, des contraintes de connectivité, de diamètre et/ou de taille. Une base de données 104 permet à un noeud de mémoriser l'état du réseau, l'état des liens de connectivité avec des noeuds voisins, des informations relatives au cluster selon des méthodes connues de l'homme du métier. Les messages utilisés par les noeuds pour dialoguer et s'échanger des informations relatives à l'état du réseau sont par exemple des messages de type « Hello » qui sont connus de l'homme du métier et ne seront pas détaillés.

Le procédé est mis en oeuvre dans chacun des clusters. Une première méthode consiste à sélectionner un membre de chaque cluster et d'élire ce membre comme chef de cluster, selon des méthodes connues de l'homme du métier. Un exemple est de choisir le membre du cluster dont l'adresse MAC est la plus faible. Une deuxième approche est que l'ensemble des membres du cluster se coordonnent directement entre eux en utilisant des messages, par exemple de type « hello », contenant les informations requises, telles que les membres du cluster de l'émetteur, l'état des liens à l'intérieur du cluster, etc.

La fonction de coût mise en oeuvre au sein de chacun des noeuds du réseau est définie, dans le cas d'un réseau où les noeuds appartiennent à un même groupe, de manière à atteindre au moins un des deux objectifs suivants :

- Construire des clusters comprenant un maximum de membres appartenant à un même groupe,
- Favoriser des clusters dont la taille est maximale par rapport à des contraintes de fonctionnement du réseau préétablies.

Dans le cas d'un réseau ad hoc mobile où les noeuds ne sont pas nécessairement regroupés par groupe opérationnel, on prendra en compte uniquement le deuxième objectif.

La fonction de coût est notamment ajustable en fonction de l'objectif recherché en prenant en compte des paramètres divers tels que: la taille des clusters, le nombre de membres des groupes dans les clusters, la qualité des liens radio, etc. En raison de la mobilité des noeuds du réseau, les clusters formés précédemment peuvent ne plus satisfaire les contraintes de géométrie, le procédé selon l'invention permettra notamment de répondre à ce problème.

Dans l'exemple donné, chaque noeud du réseau appartient à un seul groupe opérationnel selon la définition donnée préalablement. Le nombre total de groupes opérationnels est $N_g$. Le procédé va construire des clusters connexes (terme connu de l'homme du métier). Ces clusters peuvent par exemple avoir un nombre de membres maximal $n_{max}$. De plus, le diamètre du sous-graphe induit par ses membres peut être borné par la valeur maximum $d_{max}$ (définition selon la théorie des graphes).

Chaque noeud d'un cluster doit maintenir des informations concernant le cluster dont il est membre :

- les identifiants et les groupes opérationnels des noeuds du cluster,
- les liens radios entre les membres du cluster.

Chaque noeud va maintenir une table par exemple stockée dans la base de données et contenant les informations suivantes concernant les clusters voisins $\{C_k\}$ :

- Les nombres $n_{k,\ell}$ de membres d'un cluster $C_k$ par groupe opérationnel $\ell$,
- Le nombre $n_k$ de membres du cluster déduit des nombres $n_{k,\ell}$
- Optionnellement les liens radios $l_{k,\ell}$ entre les membres du cluster.

Le procédé définit une fonction de coût et un coût associé à chaque cluster. Un exemple de calcul de coût va prendre en compte le nombre des membres du cluster par groupe opérationnel.

L'objectif de l'algorithme de clusterisation selon l'invention est notamment de minimiser ce coût associé à chaque cluster. Un premier exemple de calcul de coût d'un cluster $C_k$ lorsque les noeuds du cluster appartiennent à un groupe organisationnel est donné par la fonction suivante :

$$c_1(C_k) = 1 - \frac{n_{k,\ell} \cdot (n_{k,\ell} + 1)}{n_\ell^g \cdot (n_\ell^g + 1)},$$

avec k le numéro désignant le cluster dont le coût est calculé, $\ell$ le groupe dont le nombre de membres ou noeuds est le plus élevé dans le cluster k, $n_{k,\ell}$ comme défini précédemment et $n_\ell^g$ la taille du groupe opérationnel numéro $\ell$.

Un second exemple de calcul de coût du cluster $C_k$, cette fois en l'absence de notion de groupe organisationnel, est donné par la fonction suivante :

$$c_2(C_k) = 1 - \frac{n_k \cdot (n_k + 1)}{n_{max} \cdot (n_{max} + 1)},$$

avec $n_{max}$ et $n_k$ comme définis précédemment.

Dans ces deux exemples, le coût d'un cluster vide est maximal et égal à 1.

Le procédé selon l'invention va comporter une première phase de construction de clusters en exécutant un algorithme de clusterisation et une deuxième phase de maintenance des clusters. Avant d'expliciter les étapes de l'algorithme, quelques rappels sur la notion de gain sont donnés dans le cadre de l'invention.

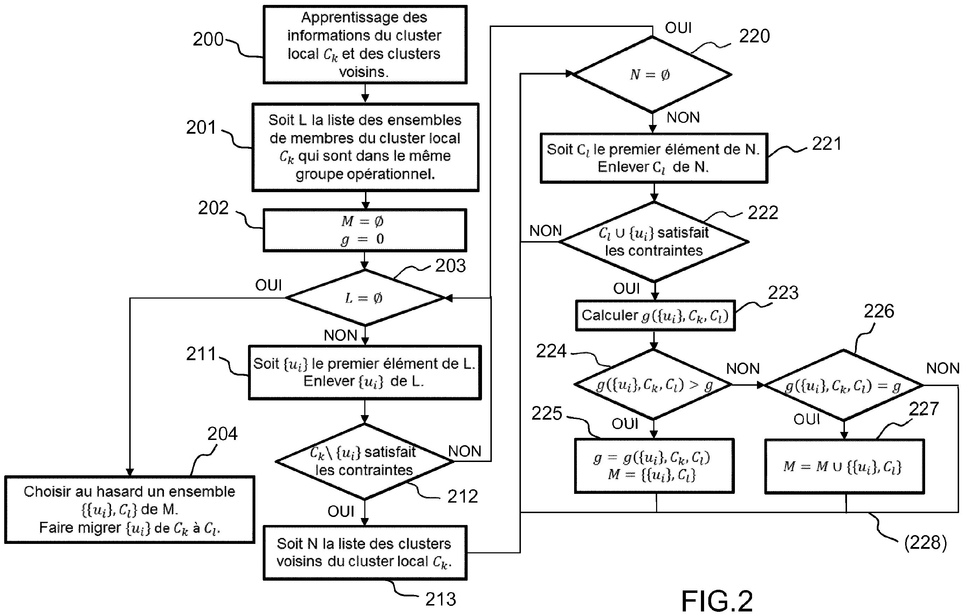

L'algorithme de clusterisation a notamment pour fonction d'effectuer un regroupement distribué et dynamique des noeuds du réseau. La figure 2 illustre un organigramme des étapes exécutées par l'algorithme de clusterisation.

La perte liée au départ d'un groupe de noeuds $\{u_i\}$ d'un cluster $C_k$ est égale à $c(C_k \setminus \{u_i\}) - c(C_k)$ et le gain lié à l'arrivée d'un groupe de noeuds $\{u_i\}$ dans un cluster $C_l$ est égal à $c(C_l) - c(C_l \cup \{u_i\})$. Le gain net $g(\{u_i\},C_k,C_l)$ lié au déplacement d'un groupe de noeuds $\{u_i\}$ depuis un premier cluster $C_k$ vers un deuxième cluster $C_l$ vaut alors :

$$g(\{u_i\},C_k,C_l) = [\, c(C_l) - c(C_l \cup \{u_i\}) \,] - [c(C_k \setminus \{u_i\}) - c(C_k) \,].$$

Régulièrement les noeuds d'un cluster $C_k$ évaluent l'opportunité pour les ensembles de noeuds $\{u_i\}$ membres du cluster $C_k$ et membres d'un même groupe opérationnel de quitter le cluster $C_k$ pour joindre un cluster voisin $C_l$. Le cluster $C_k$ doit continuer à satisfaire les contraintes définies sur les clusters dans le cas où les noeuds $\{u_i\}$ le quitteraient.

De plus l'arrivée des noeuds $\{u_i\}$ dans le cluster $C_l$ ne doit pas conduire à la « non satisfaction » des contraintes définies sur les clusters.

Pour les groupes de noeuds $\{u_i\}$ et les clusters $C_l$ qui satisfont les conditions prédéfinies, c'est le groupe de noeuds $\{u_i\}$ et le cluster $C_l$ qui conduit au meilleur gain $g(\{ui\},C_k,C_l)>0$ qui est retenu. En cas d'égalité entre plusieurs paires (groupe de noeuds, clusters), $(\{u_i\},C_l)$, l'une d'entre elles est choisie aléatoirement. Si un groupe de noeuds $\{u_i\}$ a été sélectionné pour quitter le premier cluster $C_k$ et rejoindre le deuxième cluster $C_l$, alors un échange de messages entre les deux clusters permet d'appliquer la modification ainsi décidée selon des principes connus de l'homme du métier.

Sur la figure 2, la première étape 200 est une étape d'apprentissage des informations d'un cluster local $C_k$ et des clusters voisins. On définit 201 la liste L des ensembles de membres du cluster local $C_k$ qui sont dans le même groupe opérationnel. Soit M un ensemble contenant les noeuds du cluster local $C_k$ qui ne satisfait pas les contraintes définies initialement. M est initialement vide, 202. On initialise aussi le gain g à zéro.

On teste si la liste L est vide, 203. Si la liste est vide, on choisit 204 au hasard un ensemble de noeuds du même groupe du cluster $C_k$, $(\{u_i\}, C_l)$ de M et on fait migrer les groupes de noeuds $\{u_i\}$ du cluster local $C_k$ au cluster $C_l$.

Si la liste L n'est pas vide, il existe des membres du cluster local $C_k$ qui sont dans un même groupe opérationnel et qui n'ont pas encore été évalués par l'algorithme, alors on va 211, considérer le premier élément $\{u_i\}$ de la liste L et ôter ce premier élément de la liste L.

On teste, 212, si après le départ du groupe de noeuds $\{u_i\}$ du cluster local $C_k$, ce dernier satisfait encore les contraintes sur les clusters. Si oui alors, 213, on considère N la liste des clusters voisins du cluster local $C_k$ et on va à l'étape 220. Si non, alors on retourne à l'étape 203. Le test sur les contraintes peut comporter la vérification que le diamètre du cluster obtenu après le départ du groupe $\{u_i\}$ reste inférieur à une valeur maximale de diamètre prédéfinie et/ou que le départ du groupe de noeuds $\{u_i\}$ ne rend pas le cluster non connexe.

Si la liste des clusters voisins n'est pas vide, 220, on considère le premier élément de N correspondant au premier cluster voisin de la liste, on enlève 221 le premier élément de N, puis on vérifie 222 si l'union du premier cluster voisin $C_l$ avec le groupe de noeuds du cluster {$u_i$} satisfait bien les contraintes sur les clusters. Si les contraintes sur les clusters ne sont pas satisfaites, alors on retourne à l'étape 220, sinon on va calculer 223, le gain g({$u_i$},$C_k$,$C_l$). Si ce gain est strictement supérieur à une valeur de gain g de référence, 224, alors on va, 225, mettre à jour comme référence de gain g le gain g({ui},$C_k$,$C_l$) induit par la mobilité du groupe de noeuds vers le cluster $C_l$ et on va mettre à jour la liste M={ {$u_i$},$C_l$}, puis on retourne 228 à l'étape 220. Si ce gain n'est pas strictement supérieur à g alors, 226 on teste si la valeur de gain g est égale à la valeur g({ui},$C_k$,$C_l$), si oui, on ajoute {{$u_i$},$C_l$} à M : M = M $\cup$ {{$u_i$},$C_l$}, 227 puis on retourne 228 à l'étape 220. Si la valeur de gain trouvée est strictement inférieure à g alors on retourne 228 à l'étape 220.

Le procédé réalise les contraintes sur chaque cluster en s'assurant, par exemple, que le graphe induit par le cluster possède certaines propriétés connues de l'homme du métier, par exemple, un nombre de noeuds inférieur à une valeur seuil $n_{max}$, un diamètre inférieur à une valeur minimale, une forme géométrique donnée, une géométrie en étoile dont le centre est le chef de cluster. La qualité des liens radio à l'intérieur du cluster peut aussi être vérifiée, par rapport à une valeur de qualité suffisante fixée.

Le procédé peut comporter une phase de maintenance des clusters qui est exécutée par les noeuds des clusters.

En raison de la mobilité spatiale des noeuds, à un moment, la ou les contraintes définies (par exemple la connectivité, ou le diamètre) peuvent ne plus être satisfaites. Pour le vérifier, par exemple périodiquement, chaque cluster vérifie si la liste de ses membres forme toujours un graphe connexe. Un cluster pour lequel les membres ne forment pas un graphe connexe, va considérer un par un les ensembles de ses membres qui font partie du même groupe opérationnel. Chacun de ces ensembles est scindé en autant de nouveaux clusters que de sous-composantes connexes. De plus, si un de ces ensembles ou si une de ces composantes connexes nouvellement formées ne satisfait pas la contrainte de diamètre, alors ce groupe de noeuds est scindé en autant de clusters que de sous-composantes qui satisfont la contrainte de diamètre. Lorsque la contrainte de diamètre vaut 2 par exemple, une manière de scinder un groupe de noeuds d'un cluster ne satisfaisant pas cette contrainte est d'utiliser l'heuristique suivante: (1) regrouper le noeud de plus haut degré avec tous ses voisins, et (2) construire des composantes connexes avec les noeuds restants. Pourvu que la vérification des contraintes soit réalisée suffisamment souvent, cette heuristique permet d'aboutir à des groupes de noeuds satisfaisant une ou les deux conditions de connexité et de diamètre.

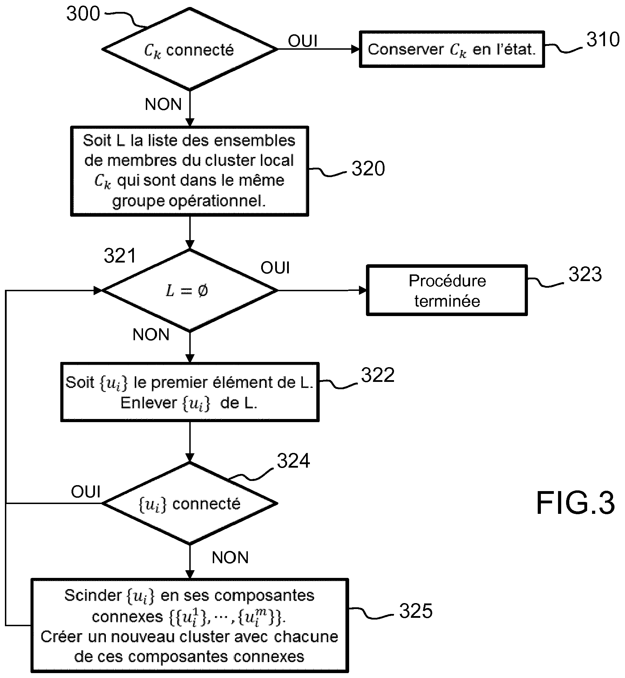

La figure 3 illustre un exemple d'organigramme des étapes mises en oeuvre pour la phase de maintenance, en considérant la contrainte de connectivité. Il serait aussi possible de mettre en oeuvre tout procédé de maintenance connu de l'homme du métier présentant comme caractéristique de vérifier que les clusters vérifient les contraintes et qui est adapté à scinder un ou plusieurs clusters qui ne vérifient pas ces contraintes en autant de clusters que nécessaire.

Lors d'une première étape, 300 on teste si le cluster $C_k$ est connecté. Si oui, 310, on conserve le cluster en l'état. Il est aussi possible de vérifier que le diamètre du cluster obtenu vérifie toujours d'autres contraintes sur les clusters.

Dans le cas où le cluster n'est pas connecté, alors l'algorithme de maintenance va exécuter les étapes décrites ci-après.

Soit L la liste des ensembles de membres du cluster local $C_k$ qui sont dans le même groupe opérationnel 320.

On teste si la liste L est vide 321, si oui, la procédure de maintenance est terminée 323.

Dans le cas où la liste L contient un élément au moins, alors 322 on va enlever de la liste le premier élément {$u_i$}. On teste 324, si l'ensemble {$u_i$} est connexe. Si oui on remonte à l'étape de test 321. Si non, alors on scinde l'ensemble 325 en plusieurs composantes connexes {{$u^1_i$},...,{$u^m_i$}}, et on va créer un nouveau cluster avec chacune de ces composantes connexes, puis on remonte à l'étape de test 321.

Les noeuds des clusters s'échangent des messages sous un format « Hello » par exemple pour prévenir des changements et mettre à jour les bases de données.

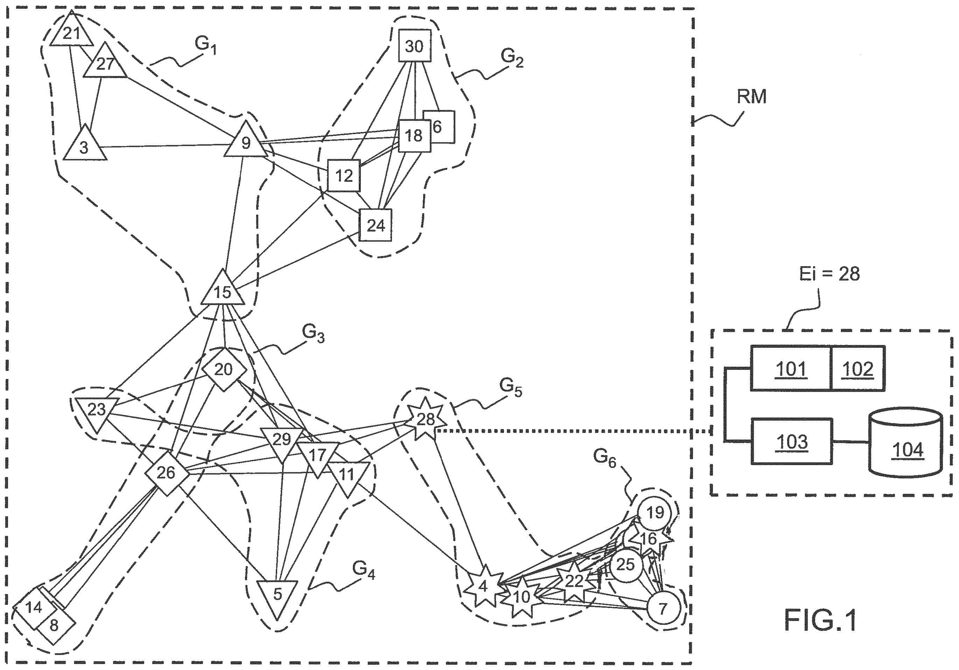

Le réseau de la figure 1 est composé de trente noeuds répartis en six groupes opérationnels de même taille $n_\ell^g = 5$.

Supposons qu'initialement chaque noeud forme son propre cluster singleton.

Tout d'abord chaque noeud $u$ va chercher à rejoindre un autre noeud $v$ voisin. Le gain associé si $v$ est du même groupe est égal à :

$$g(\{u\}, \{u\}, \{v\}) = [c(\{v\}) - c(\{u, v\})] - [c(\emptyset) - c(\{u\})].$$

Or $c(\{u\}) = c(\{v\})$ et $c(\emptyset) = 1$, donc :

$$g(\{u\}, \{u\}, \{v\}) = 2. c(\{u\}) - c(\{u, v\}) - 1,$$

$$g(\{u\},\{u\},\{v\}) = 2.\left\{1 - \frac{1*2}{5*6}\right\} - \left\{1 - \frac{2*3}{5*6}\right\} - 1.$$

$$g(\{u\},\{u\},\{v\}) = 2.\left\{1 - \frac{1}{15}\right\} - \left\{1 - \frac{1}{5}\right\} - 1,$$

$$g(\{u\},\{u\},\{v\}) = \frac{1}{15}.$$

Chaque noeud va chercher à former un cluster de deux membres avec l'un de ses noeuds voisins membre du même groupe opérationnel.

L'enchaînement exact des formations de cluster dépend de la méthode d'accès au canal radio. Pour illustrer un fonctionnement possible de l'invention regardons en détail ce qu'il peut se passer au niveau des noeuds du réseau :

- Les noeuds 1 et 19 décident individuellement de rejoindre le noeud du même groupe 13 (caché derrière le noeud 16 dans la figure),
- Les noeuds 2, 8, 14 et 20 décident individuellement de rejoindre le noeud du même groupe 26,
- Le noeud 3 décide d'aller rejoindre le noeud du même groupe 21,
- Les noeuds 4 et 16 décident individuellement de rejoindre le noeud du même groupe 22,
- Le noeud 5 décide d'aller rejoindre le noeud du même groupe 17,
- Le noeud 6 décide d'aller rejoindre le noeud du même groupe 30,
- Le noeud 25 décide d'aller rejoindre le noeud du même groupe 7,
- Le noeud 15 décide de rejoindre le noeud du même groupe 9,
- Le noeud 12 décide d'aller rejoindre le noeud du même groupe 24,
- Le noeud 23 décide d'aller rejoindre le noeud du même groupe 29,
- Les noeuds 11, 10, 18, 27 et 28 restent dans leur propre cluster.

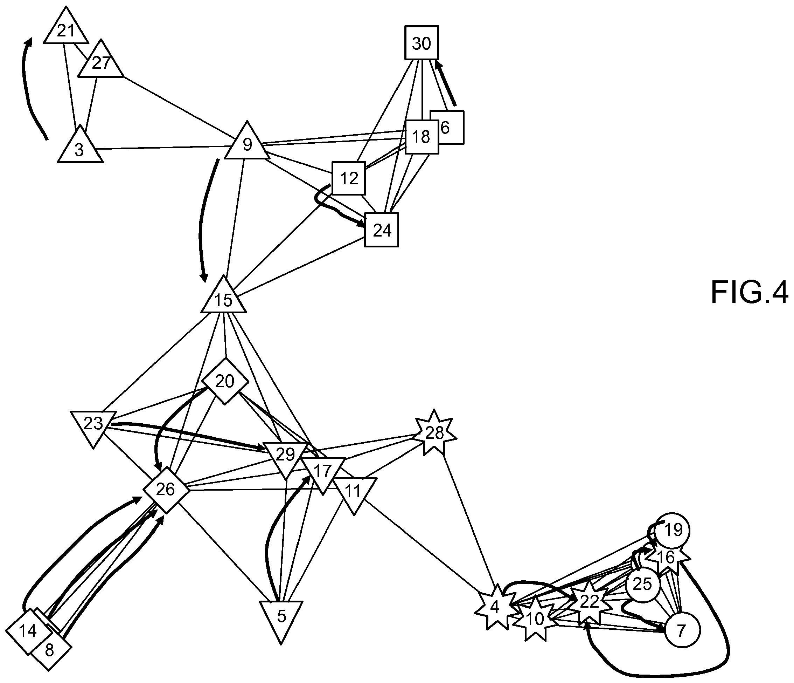

Ces mobilités entre clusters sont illustrées par la figure 4. Quinze clusters sont formés : {1, 19, 13}, {2, 4, 8, 20, 26}, {3, 21}, {4, 16, 22}, {5, 17}, {6,30}, {7,25}, {9, 15}, {10}, {11}, {12, 24}, {18}, {23,29}, {27}, {28}.

Considérons la fonction de coût $c(C_k) = 1 - \frac{n_{k,\ell}\left(n_{k,\ell}+1\right)}{n_\ell^g \cdot \left(n_\ell^g+1\right)}$. Regardons maintenant en détail une suite possible au fonctionnement de l'invention, en ce qui concerne le cluster {5, 17}, dont les deux membres sont du même groupe. La perte liée au départ du cluster de ces deux membres s'écrit :

$$c(\emptyset) - c(\{5,17\}) = 1 - \left\{1 - \frac{1}{5}\right\} = \frac{1}{5}.$$

Le cluster {5, 17} a quatre clusters voisins.
Le gain lié à la fusion du cluster {5, 17} avec {11} (tous du même groupe) est :

$$g(\{5,17\},\{5,17\},\{11\}) = [c(\{11\}) - c(\{5,11,17\})] - \frac{1}{5},$$

$$g(\{5,17\},\{5,17\},\{11\}) = \left[\left\{1 - \frac{1*2}{5*6}\right\} - \left\{1 - \frac{3*4}{5*6}\right\}\right] - \frac{1}{5},$$

$$g(\{5,17\},\{5,17\},\{11\}) = \frac{14}{15} - \frac{3}{5} - \frac{1}{5} = \frac{2}{15}.$$

Le gain lié à la fusion du cluster {5, 17} avec {23,19} (tous du même groupe) est :

$$g(\{5,17\},\{5,17\},\{23,29\}) = [c(\{23,29\}) - c(\{5,17,23,29\})] - \frac{1}{5},$$

$$g(\{5,17\},\{5,17\},\{23,29\}) = \left[\left\{1 - \frac{2*3}{5*6}\right\} - \left\{1 - \frac{4*5}{5*6}\right\}\right] - \frac{1}{5},$$

$$g(\{5,17\},\{5,17\},\{11\}) = \frac{4}{5} - \frac{1}{3} - \frac{1}{5} = \frac{4}{15}.$$

Le gain lié à la fusion du cluster {5, 17} avec {28} (de groupes différents) est :

$$g(\{5,17\},\{5,17\},\{28\}) = [c(\{28\}) - c(\{5,17,28\})] - \frac{1}{5},$$

$$g(\{5,17\},\{5,17\},\{28\}) = \left[\left\{1 - \frac{1*2}{5*6}\right\} - \left\{1 - \frac{2*3}{5*6}\right\}\right] - \frac{1}{5},$$

$$g(\{5,17\},\{5,17\},\{28\}) = \frac{14}{15} - \frac{4}{5} - \frac{1}{5} = -\frac{1}{15}.$$

Le gain lié à la fusion du cluster {5, 17} avec {9,15} (de groupes différents) est :

$$g(\{5,17\},\{5,17\},\{9,15\}) = [c(\{9,15\}) - c(\{5,9,15,17\})] - \frac{1}{5},$$

$$g(\{5,17\},\{5,17\},\{9,15\}) = \left[\left\{1 - \frac{2*3}{5*6}\right\} - \left\{1 - \frac{2*3}{5*6}\right\}\right] - \frac{1}{5},$$

$$g(\{5,17\},\{5,17\},\{9,15\}) = -\frac{1}{5}.$$

Le gain lié à la fusion du cluster {5, 17} avec {2, 4, 8, 20, 26} (de groupes différents) est :

$$g(\{5,17\},\{5,17\},\{2,4,8,20,26\})$$
$$= [c(\{2,4,8,20,26\}) - c(\{2,4,8,11,17,20,26\})] - \frac{1}{5},$$

$$g(\{5,17\},\{5,17\},\{2,4,8,20,26\}) = \left[\left\{1 - \frac{5*6}{5*6}\right\} - \left\{1 - \frac{5*6}{5*6}\right\}\right] - \frac{1}{5},$$

$$g(\{5,17\},\{5,17\},\{2,4,8,20,26\}) = -\frac{1}{5}.$$

Le cluster {5,17} choisit de fusionner avec le cluster {23, 19}, car c'est cette action qui occasionne le gain le plus élevé.

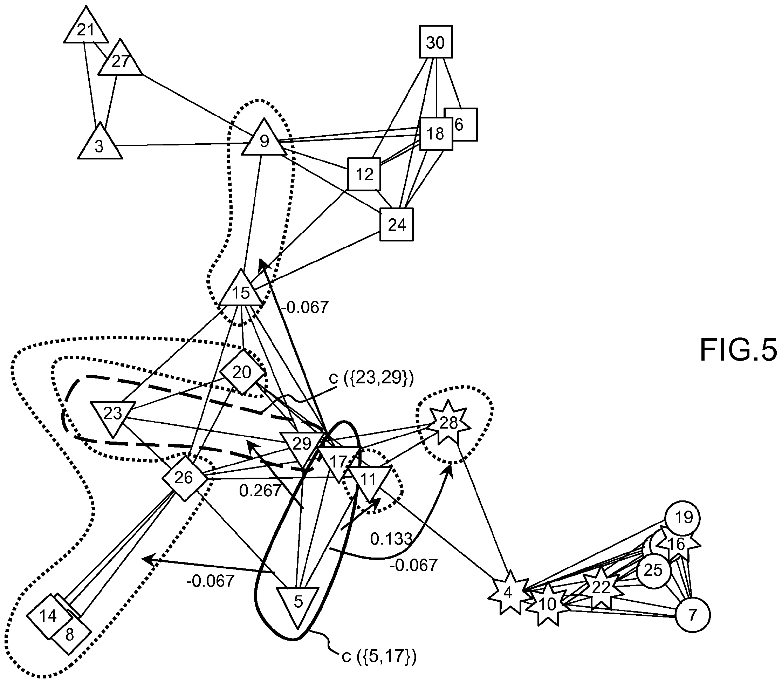

La mobilité inter-cluster des noeuds {5, 17} est illustrée par la figure 5.

L'invention ne nécessite pas la présence de chef de cluster. Elle offre une convergence rapide pour la construction de clusters et demande un faible nombre d'itérations dans des réseaux denses, par exemple moins de dix itérations dans des réseaux comportant 1000 noeuds avec une densité d'environ 150 voisins à 1 bond.

De plus, elle ne nécessite que très peu de paramètres pour fonctionner. Par exemple pour le premier exemple de fonction de coût $c_1(C_k)$, aucun paramètre de configuration n'est requis ($n_{k,\ell}$ est une variable mesurée pendant l'exécution du procédé, et $n_\ell^g$ est lié à la structure en groupes du réseau). Dans le second exemple de fonction de coût $c_2(C_k)$, seul le paramètre de configuration indiquant la taille maximale $n_{max}$ d'un cluster est requis ($n_k$ est une variable mesurée pendant l'exécution du procédé).

**Revendications**

1. - Procédé pour regrouper de manière distribuée et dynamique des noeuds dans un réseau radio ad hoc mobile RM, chaque noeud comprenant un processeur (103) muni d'un algorithme de clustérisation et un module de communication (101, 102), les noeuds communiquant entre eux au moyen de messages, comportant au moins les étapes suivantes :

   • définir a priori un ensemble de contraintes de fonctionnement du réseau à vérifier pour les clusters telles que des contraintes sur la topologie du réseau et/ou sur la qualité des liens de communication, ces contraintes étant mémorisées au sein d'une table de données,
   • regrouper les noeuds du réseau en clusters,
   • le procédé est exécuté au sein de chaque cluster, considérant un cluster local $C_k$, (201) et un ensemble de noeuds {$u_i$} appartenant à ce cluster,

   le procédé **caractérisé en ce que**

   • au niveau du noeud maître du cluster $C_k$, pour chacun des clusters $C_l$ voisins du cluster $C_k$, déterminer si les clusters $C_k \setminus \{u_i\}$ et $C_\ell \cup \{u_i\}$ vérifient les contraintes de fonctionnement sur les clusters,
   • au niveau du noeud maître du cluster local $C_k$, pour chacun des clusters voisins $C_\ell$ pour lesquels les contraintes sur les clusters sont satisfaites, calculer le gain g induit par la mobilité des groupes de noeuds {$u_i$} du premier cluster $C_k$ vers le cluster $C_\ell$, le gain g étant défini comme étant la différence entre la somme des coûts des clusters $C_\ell$ et $C_k$ et la somme des coûts des clusters $C_k \setminus \{u_i\}$ et $C_\ell \cup \{u_i\}$,
   • au niveau du noeud maître du cluster local $C_k$, retenir le cluster qui induit le gain g le plus élevé, et
   • échanger au moins un message entre les deux clusters afin que l'ensemble des noeud {$u_i$} quitte le cluster $C_k$ pour joindre le cluster $C_\ell$

2. - Procédé selon la revendication 1 **caractérisé en ce que** chaque noeud forme son propre cluster singleton.

3. - Procédé selon l'une des revendications 1 ou 2 **caractérisé en ce que** l'on vérifie les contraintes sur les clusters en vérifiant au moins l'un des paramètres suivants : la connectivité des noeuds, le diamètre du cluster par rapport à une valeur $d_{max}$, la taille du cluster, le nombre de noeuds d'un cluster par rapport à une valeur $n_{max}$ donnée, la structure en étoile d'un cluster centrée sur le chef de cluster, la qualité des liens radios au sein d'un cluster.

4. - Procédé selon l'une des revendications 1 à 3 **caractérisé en ce qu'**il comporte au moins les étapes suivantes:

   • une étape (200) d'apprentissage des informations d'un cluster local $C_k$ et des clusters voisins, un cluster comprenant un ensemble de membres ou noeuds,
   • définir (201) la liste L des ensembles de membres du cluster local $C_k$ qui sont dans un même groupe opérationnel avec des fonctions identiques, définir une liste M de noeuds initialement vide (202), initialiser une valeur de gain g à zéro,
   • tester si la liste L des ensembles de membres du cluster du même groupe opérationnel est vide (203) et choisir (204) au hasard un ensemble groupe de noeuds, cluster, ({$u_i$}, $C_l$) contenu dans une liste M correspondant aux noeuds qui induisent un gain maximal et migrer le groupe de noeuds {$u_i$} du cluster local $C_k$ au deuxième cluster $C_l$,
   • si la liste L n'est pas vide, alors on considère (211) un premier élément {$u_i$} de la liste L,
   • on teste (212) si après le départ du groupe des noeuds {$u_i$} du cluster local $C_k$, ce dernier satisfait encore les contraintes sur les clusters,

• si oui alors (213) on considère N la liste des clusters voisins du cluster local $C_k$ et on va à une étape suivante (220) de test sur la liste des clusters,
• si non, alors on retourne à l'étape (203),

• si la liste des clusters voisins n'est pas vide (220), on considère le premier élément de N correspondant au premier cluster voisin de la liste, on enlève (221) le premier élément de N, puis on vérifie (222) si l'union du premier cluster voisin $C_l$ avec le groupe de noeuds du cluster $\{u_i\}$ satisfait bien les contraintes sur les clusters,
• si les contraintes sur les clusters ne sont pas satisfaites, alors on retourne à l'étape (220),
• sinon on va calculer (223) le gain g({ui},$C_k$,$C_l$),

• si ce gain est strictement supérieur à une valeur de gain g de référence, 224, alors mettre à jour (225) la référence de gain g en utilisant le gain g($\{u_i\}$,$C_k$,$C_l$) induit par la mobilité du groupe de noeud vers le cluster $C_l$, on met à jour la liste M={ $\{u_i\}$,$C_l$ } et on retourne (228) à l'étape (220),
• si ce gain n'est pas strictement supérieur à g alors, (226) on teste si la valeur de gain g est égale à la valeur g({ui},$C_k$,$C_l$), si oui, on ajoute {$\{u_i\}$,$C_l$} à M : M = M $\cup$ {$\{u_i\}$,$C_l$}, (227), et on retourne (228) à l'étape (220),
• si la valeur de gain trouvée est strictement inférieure à g alors on retourne (228) à l'étape (220).

**5.** - Procédé selon la revendication 1 **caractérisé en ce que** l'ensemble des noeuds est formé de noeuds regroupés par fonctionnalité.

**6.** - Procédé selon l'une des revendications précédentes **caractérisé en ce qu'**il comporte une phase de maintenance dans laquelle chaque cluster détermine sa dimension et vérifie si la liste des noeuds contenus dans le cluster forme un graphe connexe.

**7.** - Procédé selon la revendication 6 **caractérisé en ce que** la dimension vérifiée est le diamètre du cluster et dans le cas où le diamètre du cluster est supérieur à une valeur donnée, le groupe de noeuds appartenant au cluster est scindé en plusieurs groupes de noeuds.

**8.** - Procédé selon la revendication 7 **caractérisé en ce qu'**on scinde le groupe de noeuds en utilisant les étapes suivantes :

• regrouper le noeud de plus haut degré avec tous ses voisins,
• construire des composantes connexes avec les noeuds restants.

**9.** - Procédé selon l'une des revendications 1 à 8 **caractérisé en ce qu'**il comporte au moins les étapes suivantes :

lors d'une première étape (300) on teste si le cluster $C_k$ vérifie les contraintes sur les clusters,

• si oui (310) on conserve le cluster en l'état,
• si le cluster ne vérifie pas les contraintes, alors on exécute les étapes suivantes :

• soit L la liste des ensembles de membres du cluster local $C_k$ qui sont dans le même groupe opérationnel, (320),
• si la liste L est vide la procédure de maintenance est terminée (323),
• si la liste L contient un élément au moins alors on teste (324) si l'ensemble $\{u_i\}$ est connexe,

• si oui on remonte à l'étape de test la liste L est vide (321),
• si non, alors on scinde l'ensemble (325) en plusieurs composantes connexes {$\{u^1_i\}$,..., $\{u^m_i\}$} et on va créer un nouveau cluster avec chacune de ces composantes connexes, puis on remonte à l'étape de test la liste L est vide (321).

**10.** - Procédé selon l'une des revendications précédentes **caractérisé en ce que** le calcul de gain induit est effectué en utilisant une fonction de coût exprimée de la manière suivante :

$$c_1(C_k) = 1 - \frac{n_{k,\ell} \cdot \left(n_{k,\ell} + 1\right)}{n_\ell^g \cdot \left(n_\ell^g + 1\right)},$$

avec $\ell$ le groupe opérationnel dont le nombre de membres est le plus élevé dans le cluster k, $n_{k,\ell}$ le nombre de noeuds du groupe $\ell$, et $n_\ell^g$ la taille du groupe opérationnel numéro $\ell$.

**11.** - Procédé selon l'une des revendications 1 à 9 **caractérisé en ce que** le calcul de gain induit est effectué en utilisant une fonction de coût exprimée de la manière suivante :

$$c_2(C_k) = 1 - \frac{n_k \cdot (n_k + 1)}{n_{max} \cdot (n_{max} + 1)},$$

avec $n_k$ le nombre de membres du cluster C$_k$, et $n_{max}$ la taille maximale admissible d'un cluster.

**12.** - Procédé selon l'une des revendications précédentes **caractérisé en ce que** les noeuds communiquent entre eux en utilisant des messages de type « Hello ».

**Patentansprüche**

**1.** Verfahren zum dynamischen und verteilten Umgruppieren von Knoten in einem mobilen Ad-hoc-Funknetz RM, wobei jeder Knoten einen Prozessor (103) umfasst, der mit einem Clustering-Algorithmus und einem Kommunikationsmodul (101, 102) versehen ist, wobei die Knoten miteinander über Nachrichten kommunizieren, die mindestens die folgenden Schritte umfassen:

   • von vornherein eine Gesamtheit des zu bestätigenden Netzwerks von Betriebsbeschränkungen für die Cluster wie z.B. die Beschränkungen der Netzwerktopologie und/oder der Qualität der Kommunikationsverbindungen definieren, wobei diese Beschränkungen in einer Datentabelle abgelegt werden,
   • die Knoten des Netzwerks werden zu Clustern umgruppiert,
   • das Verfahren wird innerhalb jedes Clusters ausgeführt, wobei in Betracht gezogen wird, dass ein lokaler C$_k$-Cluster (201) und eine Gesamtheit von Knoten {u$_i$} diesem Cluster angehören,

wobei das Verfahren **dadurch gekennzeichnet** wird, dass

   • auf Master-Knotenebene des C$_k$-Clusters für jeden der benachbarten C$_l$-Cluster des C$_k$-Clusters bestimmt wird, ob die Cluster C$_k$ \ {u$_i$} und C$_\ell$ U {u$_i$} die Betriebsbeschränkungen der Cluster bestätigen,
   • auf Master-Knotenebene des lokalen C$_k$-Clusters für jeden der benachbarten C$_\ell$-Cluster, für die die Beschränkungen der Cluster erfüllt werden, der durch die Beweglichkeit der Knotengruppen {u$_i$} des ersten C$_k$-Clusters zum C$_\ell$-Cluster induzierten Gewinns g zu berechnen ist, wobei der Gewinn g als die Differenz zwischen der Summe der Kosten der C$_\ell$- und C$_k$-Cluster und der Summe der Kosten der Cluster C$_k$ \ {u$_i$} und C$_\ell \cup$ {u$_i$} definiert wird,
   • auf Master-Knotenebene des lokalen C$_k$-Clusters den Cluster beizubehalten, der den höchsten Gewinn g induziert, und
   • mindestens eine Nachricht zwischen den beiden Clustern wechseln, sodass die Gesamtheit der Knoten {u$_i$} den C$_k$-Cluster verlässt, um dem C$_\ell$-Cluster beizutreten.

**2.** Verfahren nach Anspruch 1 **dadurch gekennzeichnet, dass** jeder Knoten seinen eigenen Entwurfscluster bildet.

**3.** Verfahren nach einem der Ansprüche 1 oder 2, **dadurch gekennzeichnet, dass** die Beschränkungen der Cluster durch Bestätigen mindestens eines der folgenden Parameter bestätigt werden: die Konnektivität von Knoten, der Clusterdurchmesser im Verhältnis zu einem d$_{max}$-Wert, die Clustergröße, die Anzahl der Clusterknoten im Verhältnis zu einem gegebenen n$_{max}$-Wert, die auf den Clusterführer zentrierte Sternstruktur eines Clusters, die Qualität der Funkverbindungen innerhalb eines Clusters.

**4.** Verfahren nach einem der Ansprüche 1 bis 3, **dadurch gekennzeichnet, dass** es mindestens die folgenden Schritte umfasst:

   • einen Schritt (200) des Lernens von Informationen aus einem lokalen C$_k$-Cluster und benachbarten Clustern, wobei ein Cluster eine Gesamtheit von Mitgliedern oder Knoten umfasst,

• Definieren (201) der Liste L der Gesamtheit von Mitgliedern des lokalen $C_k$-Clusters, die sich in derselben einsatzbereiten Gruppe mit identischen Funktionen befinden, Definieren einer Liste M von zunächst leeren Knoten (202), Initialisieren eines Werts des Gewinns g auf Null,

• Prüfen, ob die Liste L der Gesamtheit von Clustermitgliedern derselben einsatzbereiten Gruppe leer ist (203) und zufällig eine Gesamtgruppe von Knoten, Clustern, ($\{u_i\}$, $C_l$) wählen (204), die in einer Liste M enthalten ist, die Knoten entspricht, die maximalen Gewinn induzieren und Migrieren der Knotengruppe $\{u_i\}$ von dem lokalen $C_k$-Cluster zu dem zweiten Cluster $C_l$,

• wenn die Liste L nicht leer ist, wird ein erstes $\{u_i\}$-Element der Liste L betrachtet (211),

• es wird geprüft (212), ob nach dem Start der $\{u_i\}$-Knotengruppe des lokalen $C_k$-Clusters dieser letzte noch die Beschränkungen für die Cluster erfüllt,

> • wenn ja, gilt (213) N als die Liste der benachbarten Cluster des lokalen $C_k$-Clusters und es geht zu einem nächsten Prüfschritt (220) auf der Clusterliste,
> • wenn nicht, wird zu Schritt (203) zurückgekehrt,

• wenn die Liste der benachbarten Cluster nicht leer ist (220), wird das erste N-Element betrachtet, das dem ersten benachbarten Cluster in der Liste entspricht, das erste N-Element wird entfernt (221), danach wird überprüft (222), ob die Vereinigung des ersten benachbarten $C_l$-Clusters mit der Clusterknotengruppe $\{u_i\}$ die Beschränkungen der Cluster erfüllt,

• wenn die Beschränkungen für die Cluster nicht erfüllt werden, wird zu Schritt (220) zurückgekehrt,

• andernfalls wird der Gewinn $g(\{u_i\},C_k,C_l)$ berechnet (223),

> • wenn dieser Gewinn streng größer als ein Referenzgewinnwert g 224 ist, wird die Gewinnreferenz durch Verwenden des durch die Beweglichkeit der Knotengruppe zum $C_l$-Cluster induzierten Gewinns $g(\{u_i\},C_k,C_l)$ aktualisiert (225), die Liste M = $\{\{u_i\}, C_l\}$ wird aktualisiert und es wird zu Schritt (220) zurückgekehrt (228),
> • wenn dieser Gewinn nicht streng größer als g ist, wird geprüft (226), ob der Gewinnwert g gleich dem Wert $g(\{u_i\},C_k,C_l)$ ist, wenn ja, wird $\{\{u_i\},C_l\}$ zu M hinzugefügt: M = M $\cup$ $\{\{u_i\},C_l\}$ (227), und es wird zu Schritt (220) zurückgekehrt (228),
> • wenn der gefundene Gewinnwert unter g liegt, wird zu Schritt (220) zurückgekehrt (228).

**5.** Verfahren nach Anspruch 1, **dadurch gekennzeichnet, dass** die Gesamtheit der Knoten aus je Funktionalität umgruppierten Knoten gebildet wird.

**6.** Verfahren nach einem der vorhergehenden Ansprüche, **dadurch gekennzeichnet, dass** es eine Instandhaltungsphase umfasst, in der jeder Cluster seine Ausdehnung bestimmt und bestätigt, ob die Liste der in dem Cluster enthaltenen Knoten einen zusammenhängenden Graphen bildet.

**7.** Verfahren nach Anspruch 6, **dadurch gekennzeichnet, dass** die bestätigte Ausdehnung der Clusterdurchmesser ist und in dem Fall, in dem der Clusterdurchmesser größer als ein gegebener Wert ist, die Knotengruppe, die dem Cluster angehört, in mehrere Knotengruppen aufgeteilt wird.

**8.** Verfahren nach Anspruch 7, **dadurch gekennzeichnet, dass** die Knotengruppe unter Verwendung der folgenden Schritte aufgeteilt wird:

> • Umgruppieren des Knoten höchsten Grades mit all seinen Nachbarn,
> • Aufbauen der zusammenhängenden Komponenten mit den verbleibenden Knoten.

**9.** Verfahren nach einem der Ansprüche 1 bis 8, **dadurch gekennzeichnet, dass** es mindestens die folgenden Schritte umfasst:

anlässlich eines ersten Schritts (300) wird geprüft, ob der $C_k$-Cluster die Beschränkungen der Cluster bestätigt,

> • wenn ja (310), wird der Cluster in seinem Zustand beibehalten,
> • wenn der Cluster keine Beschränkungen bestätigt, werden die folgende Schritte durchgeführt:

>> • L sei die Liste der Gesamtheit der Mitglieder des lokalen $C_k$-Clusters, die in derselben einsatzbereiten Gruppe (320) sind,
>> • wenn die Liste L leer ist, wird die Prozedur der Instandhaltung beendet (323),

• wenn die Liste L mindestens ein Element enthält, wird geprüft (324), ob die Gesamtheit {uᵢ} zusammenhängend ist,

• wenn ja, wird zum Prüfschritt zurückgegangen, die Liste L ist leer (321),
• wenn nicht, wird die Gesamtheit (325) in mehrere zusammenhängende Komponenten {{u¹ᵢ},..., {uᵐᵢ}} aufgeteilt und mit jeder dieser zusammenhängenden Komponenten wird ein neuer Cluster erstellt, danach wird zum Prüfschritt zurückgegangen, die Liste L ist leer (321).

**10.** Verfahren nach einem der vorhergehenden Ansprüche, **dadurch gekennzeichnet, dass** die induzierte Gewinnermittlung unter Verwendung einer Kostenfunktion durchgeführt wird, die wie folgt ausgedrückt wird:

$$c_1(C_k) = 1 - \frac{n_{k,\ell} \cdot (n_{k,\ell} + 1)}{n_\ell^g \cdot (n_\ell^g + 1)},$$

mit $\ell$ als einsatzbereite Gruppe, wobei die Mitgliederanzahl in dem k-Cluster die höchste, $n_{k,\ell}$ die Anzahl der Knoten der Gruppe $\ell$ und $n_\ell^g$ die Größe der einsatzbereiten Gruppe Nummer $\ell$ ist.

**11.** Verfahren nach einem der Ansprüche 1 bis 9, **dadurch gekennzeichnet, dass** die induzierte Gewinnermittlung unter Verwendung einer Kostenfunktion durchgeführt wird, die wie folgt ausgedrückt wird:

$$c_2(C_k) = 1 - \frac{n_k \cdot (n_k + 1)}{n_{max} \cdot (n_{max} + 1)},$$

mit $n_k$ als Anzahl der Mitglieder des $C_k$-Clusters und $n_{max}$ als maximal zulässige Größe eines Clusters.

**12.** Verfahren nach einem der vorhergehenden Ansprüche, **dadurch gekennzeichnet, dass** die Knoten untereinander durch Verwenden von Nachrichten des Typs "Hallo" kommunizieren.

**Claims**

**1.** Method for grouping in a distributed and dynamic manner nodes in a mobile ad hoc RM radio network, each node comprising a processor (103) which is provided with a clustering algorithm and a communication module (101, 102), the nodes communicating with each other by means of messages, comprising at least the following steps:

• defining a priori a set of operating constraints of the network intended to be verified for the clusters such as constraints on the topology of the network and/or on the quality of the communication links, these constraints being stored within a data table,
• grouping the nodes of the network as clusters,
• the method is carried out within each cluster, taking into consideration a local cluster $Ck$, (201) and a set of nodes {uᵢ} which belong to this cluster,

the method being **characterised in that**

• at the level of the master node of the cluster $C_k$, for each of the clusters $C_l$ adjacent to $C_k$, determining whether the clusters $C_k \setminus \{u_i\}$ and $C_\ell \cup \{u_i\}$ verify the operating constraints on the clusters,
• at the level of the master node of the local cluster $C_k$, for each of the adjacent clusters $C_\ell$ for which the constraints on the clusters are complied with, calculating the increase g induced by the mobility of the groups of nodes {uᵢ} of the first cluster $C_k$ towards the cluster $C_\ell$, the increase g being defined as being the difference between the total of the costs of the clusters $C_\ell$ and $C_k$ and the total of the costs of the clusters $C_k \setminus \{u_i\}$ and $C_\ell \cup \{u_i\}$,
• at the level of the master node of the local cluster $C_k$, retaining the cluster which produces the highest increase g, and
• exchanging at least one message between the two clusters so that the set of nodes {uᵢ} leaves the cluster $C_k$ in order to join the cluster $C_\ell$.

2. Method according to claim 1, **characterised in that** each node forms an individual cluster singleton thereof.

3. Method according to either claim 1 or 2, **characterised in that** the constraints on the clusters are verified by verifying at least one of the following parameters: the connectivity of the nodes, the diameter of the cluster in relation to a value $d_{max}$, the size of the cluster, the number of nodes of a cluster in relation to a given value $n_{max}$, the star-like structure of a cluster which is centred on the cluster chief, the quality of the radio links within a cluster.

4. Method according to any one of claims 1 to 3, **characterised in that** it comprises at least the following steps:

> • a step (200) of learning pieces of information of a local cluster $C_k$ and adjacent clusters, a cluster comprising a set of members or nodes,
> • defining (201) the list L of the sets of members of the local cluster $C_k$ which are in the same operational group with identical functions, defining a list M of initially empty nodes (202), initialising an increase value g to zero,
> • testing whether the list L of the sets of members of the cluster of the same operational group is empty (203) and selecting (204) at random a group comprising set of nodes, cluster, ($\{u_i\}$, $C_l$) contained in a list M corresponding to the nodes which produce a maximum increase and migrating the group of nodes $\{u_i\}$ of the local cluster $C_k$ to the second cluster $C_l$,
> • if the list L is not empty, then (211) a first element $\{u_i\}$ of the list L is considered,
> • it is tested (212) if, after the start of the group of the nodes $\{u_i\}$ of the local cluster $C_k$, it still complies with the constraints on the clusters,
>
>> • if so, then (213) N is considered to be the list of the clusters adjacent to the local cluster $C_k$ and the procedure moves to a following test step (220) on the list of clusters,
>> • if not, then the procedure returns to step (203),
>
> • if the list of adjacent clusters is not empty (220), there is considered the first element of N corresponding to the first adjacent cluster of the list, the first element of N is removed (221), then it is verified (222) whether the combination of the first adjacent cluster $C_l$ with the group of nodes of the cluster $\{u_i\}$ complies with the constraints on the clusters,
> • if the constraints on the clusters have not been complied with, then the procedure returns to step (220),
> • otherwise, the increase g($\{u_i\}$, $C_k$, $C_l$) will be calculated,
>
>> • if this increase is strictly greater than a reference increase value g, 224, then updating (225) of the increase reference g using the increase g($\{u_i\}$, $C_k$, $C_l$) produced by the mobility of the node group towards the cluster $C_l$, updating of the list M = $\{\{u_i\}$, $C_l\}$ and the procedure returns (228) to step (220),
>> • if this increase is not strictly greater than g, then (226) it is tested whether the increase value g is equal to the value g($\{u_i\}$, $C_k$, $C_l$), if so then there is added $\{\{u_i\}$, $C_l\}$ to M:M = M $\cup$ $\{\{u_i\}$, $C_l\}$, (227) and the procedure returns (228) to step (220),
>> • if the increase value found is strictly less than g then the procedure returns (228) to step (220).

5. Method according to claim 1, **characterised in that** the set of nodes is formed by nodes grouped by functionality.

6. Method according to any one of the preceding claims, **characterised in that** it comprises a maintenance phase in which each cluster determines the dimension thereof and verifies whether the list of nodes contained in the cluster forms a connected graph.

7. Method according to claim 6, **characterised in that** the dimension verified is the diameter of the cluster and if the diameter of the cluster is greater than a given value, the group of nodes belonging to the cluster is divided into a plurality of groups of nodes.

8. Method according to claim 7, **characterised in that** the group of nodes is divided using the following steps:

> • grouping the node having the highest degree with all the neighbours thereof,
> • constructing components connected to the remaining nodes.

9. Method according to any one of claims 1 to 8, **characterised in that** it comprises at least the following steps:

> during a first step (300) it is tested whether the cluster $C_k$ verifies the constraints on the clusters,

• if so (310), the cluster is kept in the unchanged state thereof,
• if the cluster does not verify the constraints, then the following steps are carried out:

  • let L be the list of the sets of members of the local cluster $C_k$ which are in the same operational group, (320),
  • if the list L is empty, the maintenance procedure is finished (323),
  • if the list L contains at least one element, then it is tested (324) whether the set $\{u_j\}$ is connected,

    • if so, the procedure returns to the step of testing whether the list L is empty (321),
    • if not, then the set (325) is divided into a plurality of connected components $\{\{u^1_j\}, ....., \{u^m_j\}\}$ and a new cluster will be created with each of these connected components, then the procedure returns to the step of testing whether the list L is empty (321).

10. Method according to any one of the preceding claims, **characterised in that** the calculation of increase produced is carried out using a cost function expressed in the following manner:

$$c_1(C_k) = 1 - \frac{n_{k,\ell} \cdot (n_{k,\ell} + 1)}{n_\ell^g \cdot (n_\ell^g + 1)},$$

with $\ell$ being the operational group whose number of members is the highest in the cluster k, $n_{k,\ell}$ being the number of nodes of the group $\ell$ and $n_\ell^g$ being the size of the operational group number $\ell$.

11. Method according to any one of claims 1 to 9, **characterised in that** the calculation of increase produced is carried out using a cost function expressed in the following manner:

$$c_2(C_k) = 1 - \frac{n_k \cdot (n_k + 1)}{n_{max} \cdot (n_{max} + 1)},$$

with $n_k$ being the number of members of the cluster $C_k$ and $n_{max}$ being the maximum permitted size of a cluster.

12. Method according to any one of the preceding claims, **characterised in that** the nodes communicate with each other using messages of the type "Hello".

FIG.1

200 — Apprentissage des informations du cluster local $C_k$ et des clusters voisins.

201 — Soit L la liste des ensembles de membres du cluster local $C_k$ qui sont dans le même groupe opérationnel.

202 — $M = \emptyset$
$g = 0$

203 — $L = \emptyset$

OUI

NON

211 — Soit $\{u_i\}$ le premier élément de L. Enlever $\{u_i\}$ de L.

212 — $C_k \setminus \{u_i\}$ satisfait les contraintes

NON

OUI

213 — Soit N la liste des clusters voisins du cluster local $C_k$.

204 — Choisir au hasard un ensemble $\{\{u_i\}, C_l\}$ de M. Faire migrer $\{u_i\}$ de $C_k$ à $C_l$.

220 — $N = \emptyset$

OUI

NON

221 — Soit $C_l$ le premier élément de N. Enlever $C_l$ de N.

222 — $C_l \cup \{u_i\}$ satisfait les contraintes

NON

OUI

223 — Calculer $g(\{u_i\}, C_k, C_l)$

224 — $g(\{u_i\}, C_k, C_l) > g$

NON

OUI

225 — $g = g(\{u_i\}, C_k, C_l)$
$M = \{\{u_i\}, C_l\}$

226 — $g(\{u_i\}, C_k, C_l) = g$

NON

OUI

227 — $M = M \cup \{\{u_i\}, C_l\}$

(228)

FIG.2

18

EP 3 057 267 B1

300 — $C_k$ connecté —OUI→ Conserver $C_k$ en l'état. — 310

NON ↓

Soit L la liste des ensembles de membres du cluster local $C_k$ qui sont dans le même groupe opérationnel. — 320

321 — $L = \emptyset$ —OUI→ Procédure terminée — 323

NON ↓

Soit $\{u_i\}$ le premier élément de L. Enlever $\{u_i\}$ de L. — 322

324 — $\{u_i\}$ connecté

OUI →

NON ↓

Scinder $\{u_i\}$ en ses composantes connexes $\{\{u_i^1\}, \cdots, \{u_i^m\}\}$. Créer un nouveau cluster avec chacune de ces composantes connexes — 325

FIG.3

FIG.4

EP 3 057 267 B1

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101360033
- US 20070297374 A
- WO 2007099264 A
- US 20020103893 A
- US 6876643 B

**Littérature non-brevet citée dans la description**

- **H. WU ; Z. ZHONG ; L. HANZO.** A cluster-head selection and update algorithm for ad hoc networks. *Proc. IEEE GLOBECOM,* Décembre 2010, 1-5
- **D. CAMARA ; C. BONNET ; N. NIKAEIN.** Topology management for group oriented networks. *Proc. IEEE PIMRC,* Septembre 2010, 2739-2744